# EUROPEAN PATENT SPECIFICATION

(11) **EP 4 213 317 B1**
(45) Date of publication and mention of the grant of the patent: **08.01.2025**
(21) Application number: 22152115.6
(22) Date of filing: 18.01.2022
(51) Int. Cl.: H01S 3/067, H01S 3/1106, H01S 3/105, H01S 3/1055, H01S 3/13, H01S 3/139, H01S 3/23, H01S 3/04, H01S 3/086, H01S 3/08, H01S 3/00, H01S 3/16, H01S 3/10, G02B 6/02, H01S 3/1118

(54) **WAVELENGTH-STABILISED NARROW-LINEWIDTH MODE-LOCKED PICOSECOND LASER SYSTEM**
WELLENLÄNGENSTABILISIERTES MODENGEKOPPELTES PIKOSEKUNDENLASERSYSTEM MIT SCHMALER LINIENBREITE
SYSTÈME LASER-PICOSECONDE À MODE BLOQUÉ À LARGEUR DE RAIE ÉTROITE À LONGUEUR D'ONDE STABLE

(43) Date of publication of application: 19.07.2023
(73) Proprietor: NKT Photonics A/S, 3460 Birkerød (DK)
(72) Inventor: ANDERSEN, Thomas Vestergaard, 3460 Birkerød (DK)
(74) Representative: Kennedy, Richard E.

(56) References cited:
- EP-B1- 3 103 166
- US-A- 6 097 741
- US-A1- 2005 041 702
- US-A1- 2005 225 846
- US-B1- 7 733 922
- US-B2- 8 855 151
- APORTA LITAGO INAKI ET AL: "Tunable SESAM-Based Mode-Locked Soliton Fiber Laser in Linear Cavity by Axial-Strain Applied to an FBG", JOURNAL OF LIGHTWAVE TECHNOLOGY, IEEE, USA, vol. 35, no. 23, 1 December 2017 (2017-12-01), pages 5003 - 5009, XP011673214, ISSN: 0733-8724, [retrieved on 20171116], DOI: 10.1109/JLT.2017.2769221
- ZHAO Y ET AL: "A fiber laser for effective generation of tunable single- and dual-wavelength mode-locked optical pulses", APPLIED PHYSICS LETTERS, AMERICAN INSTITUTE OF PHYSICS, 2 HUNTINGTON QUADRANGLE, MELVILLE, NY 11747, vol. 72, no. 13, 30 March 1998 (1998-03-30), pages 1556 - 1558, XP012019890, ISSN: 0003-6951, DOI: 10.1063/1.121113
- ZHAO-KUN WANG ET AL: "Tunable and Switchable Narrow Bandwidth Semiconductor-Saturable Absorber Mirror Mode-Locked Yb-Doped Fiber Laser Delivering Different Pulse Widths", CHINESE PHYSICS LETTERS, INSTITUTE OF PHYSICS PUBLISHING, BRISTOL, GB, vol. 33, no. 3, 11 March 2016 (2016-03-11), pages 34202, XP020298346, ISSN: 0256-307X, [retrieved on 20160311], DOI: 10.1088/0256-307X/33/3/034202

## Description

### Background

Mode-locking is often used to produce extremely short pulses (e.g. femtosecond pulses) in laser systems. Such pulses have an intrinsic minimum bandwidth which is necessary to support their extremely short pulse duration: the shorter the pulse, the more bandwidth which is needed.

APORTS LITAGO INAKI et.al.:"Tunable SESAM-Based Mode-Locked Soliton Fiber Laser in Linear Cavity by Axial-Strain Applied to an FBG", JOURNAL OF LIGHTWAVE TECHNOLOGY, IEEE, USA, vol. 35, no. 23, 1 December 2017, pages 5003-5009, discloses a modelocked picosecond laser system based on the combination of an erbium-doped fiber as the active medium, and a saturated fiber Bragg grating (FBG) as a partial mirror of the cavity. The other side of the cavity consists of a semiconductor saturable absorber mirror acting also as the mode-locking device. The central wavelength of the FBG is selected by the application of axial strain giving rise to a tunable soliton over 8.6 nm on the C band with a variable spacing of 0.01 nm. The laser delivers 18.9 ps long pulses with a 0.14 nm bandwidth, an 8.2 MHz repetition rate, a pulse energy of 89 pJ, and a peak power of 4.71 W.

Other examples of wavelength tuneable and/or wavelength stabilised modelocked picosecond laser systems including a strain or temperature controlled fiber Bragg grating are known from
ZHAO Y ET AL: "A fiber laser for effective generation of tunable single- and dual-wavelength mode-locked optical pulses",APPLIED PHYSICS LETTERS, AMERICAN INSTITUTE OF PHYSICS, 2 HUNTINGTON QUADRANGLE, MELVILLE, NY 11747, vol. 72, no. 13, 30 March 1998, pages 1556-1558;
US 2005/225846 A1;
US 8 855 151 B2;
ZHAO-KUN WANG ET AL: "Tunable and Switchable Narrow Bandwidth Semiconductor-Saturable Absorber Mirror Mode-Locked Yb-Doped Fiber Laser Delivering Different Pulse
Widths",CHINESE PHYSICS LETTERS, INSTITUTE OF PHYSICS PUBLISHING,
BRISTOL, GB, vol. 33, no. 3, 11 March 2016, page 34202; and
US 6 097 741 A.

### Summary

The invention is defined in claim 1. Preferred embodiments of the invention are defined in the dependent claims.

The present specification describes a wavelength-stabilised narrow-linewidth mode-locked picosecond laser system. The system comprises a laser cavity which includes an amplifier, a mode-locking element, and a fiber Bragg grating which acts as a narrowband reflector. The system includes a mount to which the fiber Bragg grating is mounted under tension, a tension control system to adjust the tension, and a measurement device to provide a measurement output for use in wavelength-stabilising the laser system. A microcontroller or other controller wavelength-stabilises the laser by controlling the tension control system responsive to the measurement output.

The techniques and systems described in the specification sacrifice the possibility of femtosecond time durations whilst employing mode-locking to produce relatively long ( ≥ 1 ps) pulses having a narrow linewidth, which can be wavelength-stabilised in a feedback loop by controlling the tension of the fiber Bragg grating reflector of the laser cavity. It has been found that this technique provides a very stable narrow-linewidth source in which the wavelength of the laser can be stabilised to within e.g. 5 or 10 picometers of a desired operating wavelength. Moreover, since the described techniques employ mode-locking and thus provide a pulsed output, they can be used to produce higher peak powers compared to other narrow-linewidth systems which do not employ the described techniques. In this way, a balance is struck between multiple inter-related factors to provide a laser which is particularly suited for applications in which high peak power is required in a stable, narrow, linewidth. Such applications include frequency conversion in nonlinear crystals and in particular frequency conversion to the deep ultraviolet in which variation of the laser wavelength by as little as 200 picometers can result in loss of efficiency.

The measurement output is related to (e.g. it may be a measure of) a current operating wavelength of the fiber Bragg grating (FBG). In some implementations, the measurement output may be a measure of a current operating wavelength of the laser system, or may be related to the current operating wavelength of the laser system.

The FBG may comprise a uniform grating period. That is, the FBG may be unchirped.

The FBG mount may be formed of a positive thermal expansion material such as aluminium, and the measurement device may comprise a temperature sensor configured to measure a temperature of at least a part of the mount. Since the FBG is mounted to the mount, the longitudinal tension of the FBG is dependent on the extent of thermal expansion of the mount. Since the current operating wavelength of the fiber Bragg grating is dependent on its longitudinal tension, measuring the temperature of at least part of the mount provides a measurement output which is related to the current operating wavelength of the FBG. Thus, the temperature of at least part of the mount may be used as a feedback signal for stabilising the current operating wavelength of the FBG, thereby to wavelength-stabilise the laser system.

Alternatively, the measurement device may comprise a spectrometer or other wavelength-measurement device arranged to measure the wavelength of radiation generated (e.g. output) by the laser cavity. Since the FBG is narrowband, the wavelength of radiation generated by the laser cavity is determined by, and will often be the same as, the current operating wavelength of the FBG. Thus, measuring the wavelength of radiation generated (e.g. output) by the laser cavity can provide a measurement output which is related to the current operating wavelength of the FBG and may thus be used to wavelength-stabilise the laser system. In some cases, nonlinear effects in the laser cavity may result in a change, for example a shift, between the FBG operating wavelength and the wavelength of the measured radiation. It will be understood that despite this shift / offset, the measured wavelength is nevertheless related to the current operating wavelength of the FBG and may thus be used as a feedback signal for wavelength-stabilising the laser system.

In some cases, a spectrometer or other wavelength-measurement device may measure the wavelength of radiation downstream of the output of the laser cavity, e.g. after nonlinear frequency conversion in one or more nonlinear elements. It will be understood that in this situation also, the measured wavelength will be related to the current operating wavelength of the FBG, because the wavelength of the frequency-converted radiation is dependent on the wavelength of radiation generated by the laser system. Thus, measuring the wavelength of radiation downstream of the output of the laser cavity (e.g. after nonlinear frequency conversion in one or more nonlinear elements) may also provide a feedback signal for stabilising the current operating wavelength of the FBG and thus for wavelength-stabilising the laser system.

For example, UV radiation may be generated by providing one or more nonlinear elements after the laser system. This UV radiation may be measured to provide a measurement output which is related to the current operating wavelength of the fiber grating, thus providing a feedback signal for use in stabilising the current operating wavelength of the laser system.

More generally, any measurement output which is related to a current operating wavelength of the fiber Bragg grating may be used as a feedback signal for use in controlling the tension control system to wavelength stabilise the laser system.

The tension control system is electrically controlled. In particular, the controller is configured to receive a feedback signal derived from the measurement device and to generate a responsive control signal for controlling the tension control system.

The tension control system comprises one or more temperature control devices configured to control the temperature of the mount. As the temperature of the mount is changed, it thermally expands/contracts, thereby controlling the tension of the FBG which is mounted to it. In addition, the tension control system may optionally additionally comprise a piezoelectrically actuator configured to move one part of the mount relative to another, thereby to control the tension of the FBG.

### Brief Description of the Drawings

So that the invention may be more easily understood, examples thereof will now be described with reference to the accompanying figures, in which:
Figure 1 is a schematic of an example laser system;
Figure 2 shows the FBG mounting arrangement of the laser system of Figure 1 in more detail;
Figure 3 illustrates the underside of the mount of the laser system of Figure 1, showing the temperature controllers.
Figure 4 is a general schematic of an example laser system;
Figure 5 illustrates a control loop which may be executed by a laser system controller, and
Figure 6 illustrates a frequency conversion arrangement.

### Detailed Description

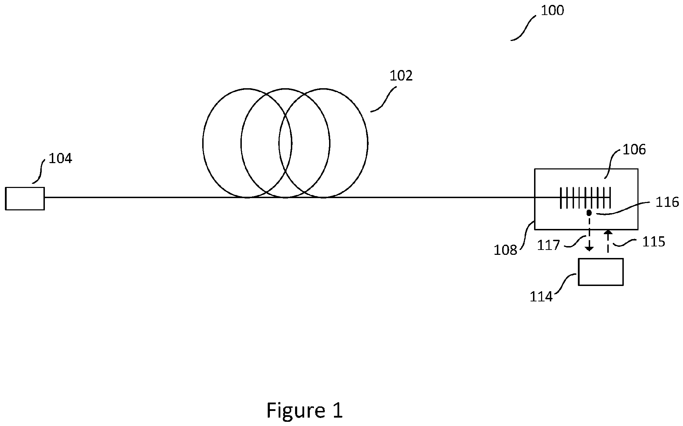

Figures 1 to 3 illustrate an example laser system 100 which produces a modelocked train of picosecond pulses.

As shown in Figure 1, the laser system 100 includes a linear laser cavity comprising a ytterbium-doped fiber amplifier 102, a modelocking element in the form of a semiconductor saturable absorber mirror (SESAM) 104, and a fiber Bragg grating (FBG) 106. The FBG 106 is a narrowband reflective device which limits the linewidth of the laser system 100 and thus ensures that picosecond pulses of an appropriate duration are output. For example, the linewidth of the laser system 100 may be less than 200 picometers. The pulses produced by the laser system 100 may have a duration of between 10 ps and 100 ps.

The FBG acts as a narrowband reflector around an operating wavelength determined by the longitudinal tension within the FBG 106. As will be appreciated by those skilled in the art, the operating wavelength of the laser system 100 (e.g. the central wavelength at which the laser system operates) is dependent on the operating wavelength of the FBG 106, and this wavelength varies dependent on the tension within the FBG 106.

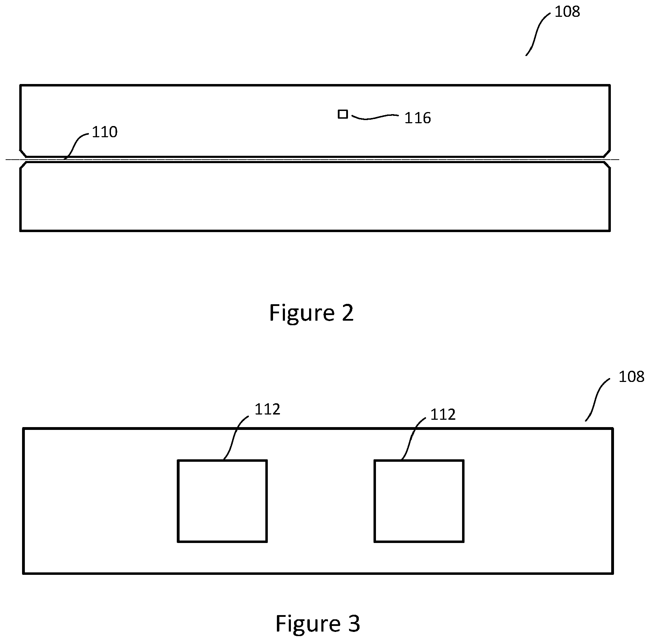

The laser system 100 includes a tension control system which is used to prevent drift of the laser operating wavelength which may otherwise occur due to environmental changes. Referring to Figure 2, the the FBG mount 108 may be formed of a positive thermal expansion material such as aluminium. The mount 108 includes an elongate groove 110 and the FBG 106 is fixed in the groove 110 under tension using an adhesive. The tension of the FBG 106 is adjustable using one or more thermoelectric coolers (TECs) 112 positioned on the underside of the aluminium mount 108, as shown in Figure 3. It will be understood that the TECs 112 may be used to heat as well as cool the mount, responsive to an electrical control signal. When the temperature of the TEC is increased, the aluminium mount 108 heats up, causing it to expand. Since the FBG 106 is fixed to the mount 108, and the expansion of the mount 108 is partially in the longitudinal direction of the FBG, the tension of the FBG increases as the mount thermally expands. Similarly, when the temperature of the TEC is reduced, the aluminium cools to a lower temperature and thus contracts, thereby reducing the tension in the FBG. During manufacture, the FBG may be fixed to the mount 108 under tension whilst the temperature of the aluminium mount is maintained at a chosen value; in operation this allows the tension of the FBG to be tuned by varying the temperature above and below this chosen value.

Returning to Figure 1, the TECs 112 comprise Peltier devices which can be heated or cooled responsive to an electric signal which is provided by controller 114. Controller 114 includes a microcontroller and may additionally include further appropriate electronics for e.g. amplifying the temperature control signal 115 to an appropriate level for controlling the temperature of the TECs.

As shown, a measurement device in the form of a temperature sensor 116 is positioned on top of the aluminium mount to measure its temperature. Controller 114 receives a feedback signal 117 derived from the temperature sensor 116 and is configured to wavelength-stabilise the laser by adjusting the temperature control signal 115 so as to heat or cool the aluminium mount responsive to the feedback signal 117. More specifically, the controller includes one or more processors configured to operate in accordance with computer-readable instructions to execute a feedback loop which adjusts the temperature control signal to ensure that the measured temperature of the aluminium mount, as determined by the feedback signal 117, is maintained at a selected level, e.g. within a predefined tolerance.

By maintaining the temperature of the aluminium mount at the selected level the tension of the FBG is also maintained, thereby stabilising the operating wavelength of the FBG and thus the operating wavelength of the laser system 100.

The operating wavelength of the laser system 100 may also be more coarsely tuned by altering the temperature of the mount 108 using the TECs 112 until a desired operating wavelength is achieved. To identify that the laser has been tuned to the desired wavelength, the wavelength may either be measured using a spectrometer, or inferred from the temperature of the mount as measured by the temperature sensor 116. In particular, appropriate calibration can be performed to determine the relationship between the measured temperature and the operating wavelength of the laser (an approximately linear relationship is expected).

Once the laser system 100 has been tuned to the desired wavelength, it is stabilised at this desired operating wavelength using the wavelength-stabilisation feedback loop described above. In this way, stable operation at any desired wavelength within the ytterbium gain band may be achieved, e.g. at any wavelength between 1020 nm and 1080 nm. It has been found that the techniques described herein permit stabilisation of the operating wavelength of the laser to within e.g. 10%, 5% or 1% of the spectral linewidth. In some examples, the wavelength may be stabilised to within 10 picometers or 5 picometers of a desired operating wavelength.

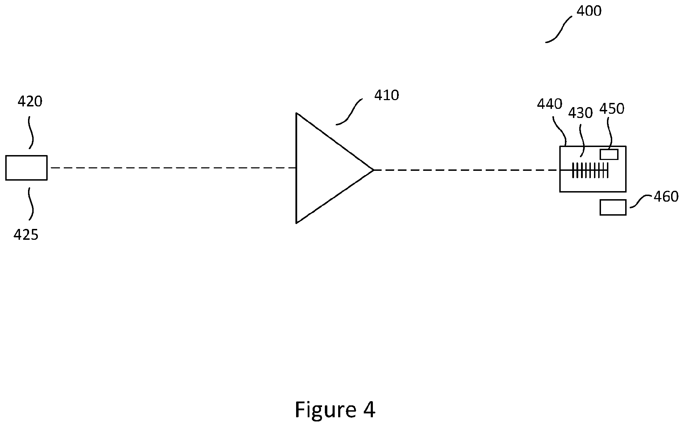

Figure 4 shows a more general schematic of an example wavelength-stabilised narrow-linewidth mode-locked picosecond laser system 400. The laser system 400 includes a laser cavity which includes an amplifier 410, a modelocking element 420, and a fiber Bragg grating (FBG) 430 which acts as a narrowband reflector. The laser system 400 further comprises a mount 440 to which the FBG 430 is mounted under tension, a tension control system configured for adjusting the tension of the FBG 430, a measurement device 450 to provide a measurement output related to a current operating wavelength of the FBG 430, and a controller 460 to wavelength-stabilise the laser by controlling the tension control system responsive to the measurement output.

The amplifier may comprise a ytterbium-doped fiber amplifier as described above in relation to Figures 1 to 3, or it may comprises another type of fiber amplifier such an erbium-doped fiber amplifier (EDFA), a thulium-doped fiber amplifier, a holmium-doped fiber amplifier, or a praseodymium-doped fiber amplifier. Further alternatively, a bulk amplifier rather than a fiber amplifier may be used. The laser cavity may include a plurality of amplifiers of the same or different types, e.g. an amplifier chain.

The modelocking element 420 may comprises a suitable passive modelocking element, such as a saturable absorber e.g. a semiconductor saturable absorber mirror (SESAM) as described above in relation to Figures 1-3. In some examples, e.g. if a SESAM is used, the modelocking element may also act as a reflector 425 which, together with the FBG 430, forms the laser cavity. However, alternatively, a separate reflector may be provided to form the cavity with the FBG 430. In some examples, the modelocking element 420 may comprise an active rather than a passive element. For example, the modelocking element 420 may comprise a modulator such as an electro-optic modulator or acousto-optic modulator which is driven by a periodic electric signal so as to cause modelocking of the laser system 400.

The FBG 430 may be substantially uniform, e.g. the grating period and/or the index modulation may vary by less than 50%, such as less than 25%, such as less than 10%, such as less than 1% along the length of the grating. As will be understood by those skilled in the art, the index modulation of the FBG may be set to obtain a desired bandwidth of the grating and the length of the grating may be used to set the peak reflectivity. The FBG acts as a reflector around an operating wavelength (e.g. center wavelength) determined by the grating period. The grating period may varied by varying the longitudinal tension of the FBG, thereby tuning its operating wavelength. The operating wavelength of the FBG may comprise the wavelength at which the spectral response of the FBG has its peak.

The peak reflection, also referred to as the reflectivity unless otherwise clear, may be less than or equal to 99%, such as less than or equal to 80%, such as less than or equal to 70%, such as less than or equal to 60%, such as less than or equal to 50%, such as less than or equal to 40%, such as less than or equal to 30%, such as less than or equal to 20%, such as less than or equal to 10%, The reflectivity may be more than or equal to 5%, such more than or equal to 10%, such more than or equal to 20%, such more than or equal to 30%, such more than or equal to 40%, such more than or equal to 50%, such more than or equal to 60%, such more than or equal to 70%, such more than or equal to 80%, such more than or equal to 90%, such more than or equal to 99%. In one embodiment the reflectivity is between 80% and 100% such as 99%. In one embodiment the reflectivity is between 70% and 80%, such as 75. In one embodiment the reflectivity is between 10% and 25%, such as 15%.

The width of the FBG spectral response may be less than 1000 picometers, e.g. less than 500 picometers, e.g. less than 200 picometers, e.g. less than 100 picometers.

The tension control system is configured to increase or reduce the tension within the FBG 430 responsive to an electric signal derived from the controller 460. The tension control system is a temperature-based system, e.g. as described above in relation to Figures 1-3, which controls the temperature of at least a portion of the mount such that it thermally expands or contracts and thereby adjusts the tension of the FBG 430.

The mount 440 may comprise any suitable material. For temperature-based tension control, the mount may comprise any suitable positive thermal expansion material such as aluminium or a ceramic material. The mount 440 may include a substrate and a holder within which the FBG is glued in place. One or more temperature controllers may be provided to control the temperature of the mount to cause thermal expansion or contraction of the mount (or at least part thereof), thereby to adjust the tension of the fiber Bragg grating. Alternatively, in examples not in accordance with the invention where only piezoelectric tension control is used, the mount may include an actuator including a suitable piezoelectric element which causes movement of one FBG 430 mount point relative to another, responsive to an electric signal derived from the controller 440. In some cases both temperature-based and piezoelectric-tension control may be employed to achieve improved control of the tension of the FBG 430 and thus of the operating wavelength of the laser system 400.

The measurement device 450 provides a measurement output related to a current operating wavelength of the FBG 430. The measurement device 450 may comprise a temperature sensor which measures the temperature of the mount 440, e.g. as described above in relation to Figures 1-3. In this case, the temperature of the mount is related to the operating wavelength of the FBG 430 because the tension within the FBG 430 is dependent on the extent to which the mount has thermally expanded or contracted, and the operating wavelength of the FBG is dependent on its tension. In particular, an approximately linear relationship is expected between the temperature of the mount and the FBG operating wavelength.

Alternatively, however, the measurement device 450 may be configured to measure the operating wavelength of the laser system 400 directly. For example, the measurement device 450 may comprise a spectrometer which receives a portion of the radiation generated by the laser cavity (e.g. via a tap coupler) and measures its wavelength; this can then be equated with the current operating wavelength of the FBG 430. More generally, any measurement which is related to a current operating wavelength of the FBG 430 or of the laser system 400 may be used for the purpose of wavelength stabilisation.

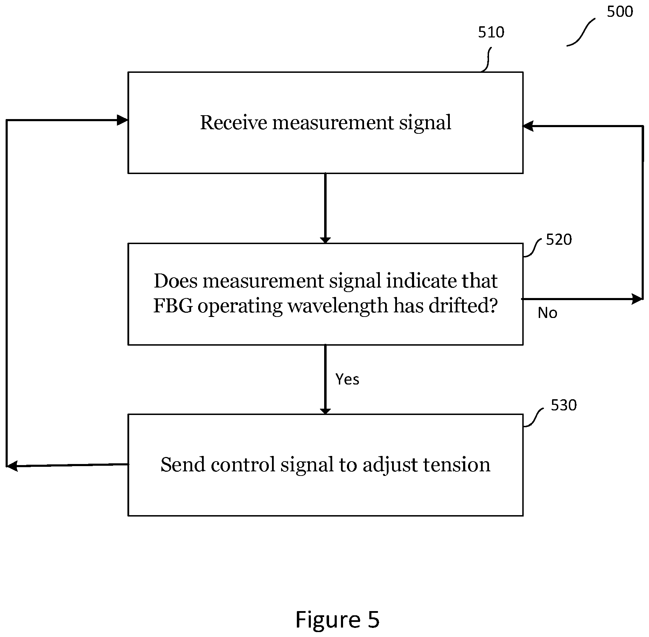

The controller 460 may comprise a microcontroller or other data processing apparatus. The controller 460 includes one or more processors and a memory storing computer-readable instructions which, when executed by the processor cause the processor to perform one or more operations. Figure 5 illustrates a wavelength stabilisation procedure 500 which may be executed by the controller 460. As shown, the controller receives 510 a measurement signal (e.g. feedback signal) derived from the measurement device 450. The controller 460 determines 520 whether the measurement signal indicates that the current operating wavelength of the FBG 430 has deviated from a desired wavelength by more than a threshold amount. If it has, the controller 460 sends 530 a control signal to the tension control system to cause the tension control system to adjust the tension of the FBG 430 to bring its current operating wavelength towards the desired wavelength, i.e. by either increasing or decreasing the tension as appropriate. The process 500 may be carried out continuously during operation of the laser system 400 so as maintain the operating wavelength of the laser system 400 at the desired wavelength with a high degree of stability, e.g. within 10 picometers or within 5 picometers of the desired wavelength.

The controller 460 may also be used to tune the current operating wavelength of the laser system 400 to another designed wavelength by adjusting the tension control system until the measurement signal indicates that the current operating wavelength of the FBG 430 corresponds to the desired wavelength. Once the laser system 400 has been tuned to the desired wavelength, it may be stabilised at this desired operating wavelength using the wavelength-stabilisation procedure 500 shown in Figure 5. In this way, tunable, wavelength-stabilised operation can be achieved using the laser system 400.

In various implementations, the pulses produced by laser systems described in this specification may have a duration of greater than 1 ps, e.g. greater than 10 ps or greater than 20ps.

In various implementations, the pulses produced by laser systems described in this specification may have a duration of less than 100 ps, e.g. less than 60 ps or less than 50 ps. In some examples the laser system may produce pulses having a duration between 30 ps and 60 ps. Pulse durations may be measured based on the full width at half maximum (FWHM) measure.

In various implementations, the peak powers generated by laser systems described in this specification may be greater than 1kW, such as greater than 10kW or greater than 15 kW.

The laser systems described in this specification may be used to achieve efficient frequency conversion in nonlinear elements such as nonlinear crystals. As will be appreciated by those skilled in the art, suitable frequency conversion arrangements may be used to reach various wavelengths of interest for particular applications, for example conversion from around 1 micron to the ultraviolet or deep ultraviolet (e.g. below 300 nm) is possible using such techniques.

It is important to note that the systems 100, 400 combine multiple characteristics, in particular narrow linewidth, wavelength stability and pulsed operation, which work together to achieve high efficiency in frequency conversion. Narrow linewidth leads to efficient frequency conversion because of phase matching constraints, since only a narrow linewidth can typically be converted, with any energy outside the phase matching bandwidth remaining unconverted. While narrow linewidth may be achieved using CW lasers, pulsed operation leads to higher peak powers and thus higher efficiency conversion. Wavelength stability also leads to efficiency because any variation of the laser wavelength may result in efficiency losses. For example, in conversion to the deep ultraviolet, a variation in the laser wavelength by as little as 200 picometers can result in loss of efficiency.

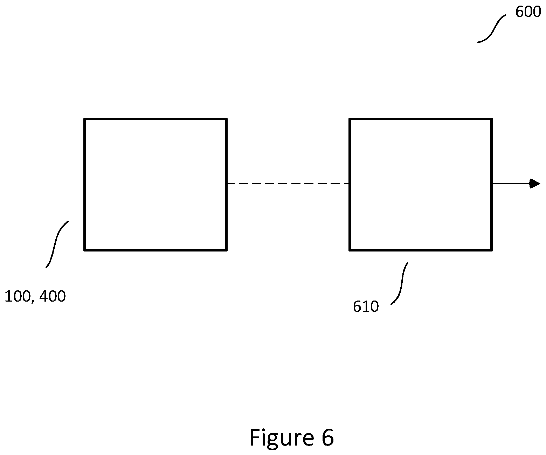

Figure 6 illustrates a frequency conversion arrangement 600 using one or more of the wavelength-stabilised narrow-linewidth mode-locked picosecond laser systems 100, 400 described above. As shown, picosecond pulses from the laser system 100, 400 are launched (e.g. using suitable optics) into one or more nonlinear elements 610 (e.g. one or more nonlinear crystals), where they undergo frequency conversion by way of one or more nonlinear effects, such as harmonic generation (e.g. second-harmonic generation). In some examples frequency converted light generated in one nonlinear element may be combined in a second nonlinear element with unconverted light (or light generated a third nonlinear element) to generate further wavelengths using e.g. sum-frequency generation, difference-frequency generation or parametric frequency conversion. In some cases the outputs of two or more wavelength-stabilised narrow-linewidth mode-locked picosecond laser systems may be combined together in a nonlinear element of the frequency conversion arrangement, thereby further expanding the possibilities for the generated wavelengths.

A wavelength-stabilised laser system as described in this specification may also be used to provide a stable seed source in a larger laser system which employs amplification in a solid state crystal. This is particularly advantageous where the solid state crystal comprises a Nd:YAG crystal, or another other solid state crystal with a limited gain bandwidth, since in such cases any wavelength variation of the seed may result in loss of efficiency. For example, a wavelength-stabilised laser system operating at 1064.35 nm may be used as a seed in a larger (e.g. bulk) laser system which employs amplification in a Nd:YAG crystal.

Many modifications and variations of the systems and techniques described herein will be evident to those skilled in the art.

## Claims

1. A wavelength-stabilised narrow-linewidth mode-locked picosecond laser system (100) comprising:
a laser cavity which includes:
an amplifier (102);
a modelocking element (104); and
a fiber Bragg grating (106) which acts as a narrowband reflector,
a mount (108) to which the fiber Bragg grating is mounted under tension;
a tension control system to adjust the tension of the fiber Bragg grating;
a measurement device (116) to provide a measurement output related to a current operating wavelength of the fiber Bragg grating, and
a controller (114) to wavelength-stabilise the laser by controlling the tension control system responsive to the measurement output, wherein the controller is configured to receive a feedback signal derived from the measurement device and to generate a responsive control signal for electrically controlling the tension control system,
wherein the tension control system comprises one or more temperature control devices (112) to control the temperature of at least part of the mount to cause thermal expansion or contraction of the at least part of the mount, thereby to adjust the tension of the fiber Bragg grating.

2. The laser system of claim 1, wherein the at least part of the mount comprises aluminium.

3. The laser system of any one of the preceding claims, wherein the measurement device comprises a temperature sensor configured to measure a temperature of at least part of the mount.

4. The laser system of any one of claims 1 or 2, wherein the measurement device is configured to measure a wavelength of radiation generated using the laser cavity.

5. The laser system of any one of the preceding claims, wherein the laser cavity is configured to provide pulses having a duration of less than 100 picoseconds and/or wherein the pulses have a duration of between 30 and 60 picoseconds.

6. The laser system of any one of the preceding claims, wherein the spectral linewidth of the laser is less than 200 picometers.

7. The laser system of any one of the preceding claims, wherein the controller is configured to stabilise the operating wavelength of the laser to within 10% or less of the spectral linewidth of the laser, such as within 5% or less of the spectral linewidth of the laser, such as within 1% or less of the spectral linewidth of the laser

8. The laser system of any one of the preceding claims, wherein the controller is configured to stabilise the operating wavelength of the laser to within 10 picometers or less of a desired operating wavelength, or to stabilise the operating wavelength of the laser to within 5 picometers or less of a desired operating wavelength.

9. The laser system of any one of the preceding claims, wherein the amplifier comprises a ytterbium fiber amplifier and the operating wavelength of the laser is between 1020 nm and 1080 nm.

10. A apparatus comprising:
the wavelength-stabilised laser system (100) of any one of the preceding claims, and
a frequency-converter (610) to convert the operating wavelength of the laser system to a converted wavelength.

11. The apparatus of claim 10, wherein the frequency-converter comprises one or more nonlinear frequency conversion crystals.

12. The apparatus of claim 10 or claim 11, wherein the frequency-converter is configured to convert the operating wavelength of the wavelength-stabilised laser system to a wavelength shorter than 300 nm.

13. A laser system comprising:
the wavelength-stabilised laser system (100) of any one of the preceding claims, and
a solid state crystal configured to amplify radiation generated using the wavelength-stabilised laser system.

14. The laser system of claim 13, wherein the solid state crystal comprises a Nd:YAG crystal.

## Patentansprüche

1. Wellenlängenstabilisiertes, modengekoppeltes Pikosekundenlasersystem (100) mit schmaler Linienbreite, umfassend:
einen Laserresonator, der Folgendes enthält:
einen Verstärker (102);
ein Modenkopplungselement (104); und
ein Faser-Bragg-Gitter (106), das als Schmalbandreflektor fungiert,
eine Halterung (108), an der das Faser-Bragg-Gitter unter Spannung montiert ist;
ein Spannungssteuerungssystem zum Einstellen der Spannung des Faser-Bragg-Gitters;
eine Messvorrichtung (116) zum Bereitstellen eines Messergebnisses in Bezug auf eine aktuelle Betriebswellenlänge des Faser-Bragg-Gitters, und
eine Steuerung (114) zum Wellenlängenstabilisieren des Lasers durch Steuern des Spannungssteuerungssystems als Reaktion auf das Messergebnis, wobei die Steuerung dazu konfiguriert ist, ein von der Messvorrichtung abgeleitetes Rückkopplungssignal zu empfangen und ein Steuersignal als Reaktion zum elektrischen Steuern des Spannungssteuerungssystems zu erzeugen,
wobei das Spannungssteuerungssystem ein oder mehrere Temperatursteuerungsvorrichtungen (112) umfasst, um die Temperatur von mindestens einem Teil der Halterung zu steuern, um eine thermische Ausdehnung oder Kontraktion des mindestens einen Teils der Halterung zu bewirken und dadurch die Spannung des Faser-Bragg-Gitters anzupassen.

2. Lasersystem nach Anspruch 1, wobei der mindestens eine Teil der Halterung Aluminium umfasst.

3. Lasersystem nach einem der vorhergehenden Ansprüche, wobei die Messvorrichtung einen Temperatursensor umfasst, der zum Messen einer Temperatur von mindestens einem Teil der Halterung konfiguriert ist.

4. Lasersystem nach einem der Ansprüche 1 oder 2, wobei die Messvorrichtung dazu konfiguriert ist, eine Wellenlänge der unter Verwendung des Laserresonators erzeugten Strahlung zu messen.

5. Lasersystem nach einem der vorhergehenden Ansprüche, wobei der Laserresonator dazu konfiguriert ist, Impulse mit einer Dauer von weniger als 100 Pikosekunden bereitzustellen und/oder wobei die Impulse eine Dauer zwischen 30 und 60 Pikosekunden aufweisen.

6. Lasersystem nach einem der vorhergehenden Ansprüche, wobei die spektrale Linienbreite des Lasers weniger als 200 Pikometer beträgt.

7. Lasersystem nach einem der vorhergehenden Ansprüche, wobei die Steuerung dazu konfiguriert ist, die Betriebswellenlänge des Lasers auf innerhalb von 10 % oder weniger der spektralen Linienbreite des Lasers zu stabilisieren, wie etwa innerhalb von 5 % oder weniger der spektralen Linienbreite des Lasers, wie etwa innerhalb von 1 % oder weniger der spektralen Linienbreite des Lasers.

8. Lasersystem nach einem der vorhergehenden Ansprüche, wobei die Steuerung dazu konfiguriert ist, die Betriebswellenlänge des Lasers auf innerhalb von 10 Pikometer oder weniger einer gewünschten Betriebswellenlänge zu stabilisieren oder die Betriebswellenlänge des Lasers auf innerhalb von 5 Pikometer oder weniger einer gewünschten Betriebswellenlänge zu stabilisieren.

9. Lasersystem nach einem der vorhergehenden Ansprüche, wobei der Verstärker einen Ytterbium-Faserverstärker umfasst und die Betriebswellenlänge des Lasers zwischen 1020 nm und 1080 nm liegt.

10. Einrichtung, umfassend:
das wellenlängenstabilisierte Lasersystem (100) nach einem der vorhergehenden Ansprüche und
einen Frequenzumformer (610) zum Umformen der Betriebswellenlänge des Lasersystems in eine umgeformte Wellenlänge.

11. Einrichtung nach Anspruch 10, wobei der Frequenzumformer einen oder mehrere nichtlineare Frequenzumformungskristalle umfasst.

12. Einrichtung nach Anspruch 10 oder Anspruch 11, wobei der Frequenzumformer dazu konfiguriert ist, die Betriebswellenlänge des wellenlängenstabilisierten Lasersystems auf eine Wellenlänge von weniger als 300 nm umzuformen.

13. Lasersystem, umfassend:
das wellenlängenstabilisierte Lasersystem (100) nach einem der vorhergehenden Ansprüche und
einen Festkörperkristall, der dazu konfiguriert ist, eine unter Verwendung des wellenlängenstabilisierten Lasersystems erzeugte Strahlung zu verstärken.

14. Lasersystem nach Anspruch 13, wobei der Festkörperkristall einen Nd:YAG-Kristall umfasst.

## Revendications

1. Système laser-picoseconde à mode bloqué à largeur de raie étroite à longueur d'onde stable (100) comprenant :
une cavité laser qui comprend :
un amplificateur (102) ;
un élément de verrouillage de mode (104) ; et
un réseau de Bragg à fibres (106) qui agit en tant que réflecteur à bande étroite,
un support (108) sur lequel le réseau de Bragg à fibres est monté sous tension ;
un système de commande de tension pour régler la tension du réseau de Bragg à fibres ;
un dispositif de mesure (116) pour fournir une sortie de mesure liée à une longueur d'onde de fonctionnement actuelle du réseau de Bragg à fibres, et
un dispositif de commande (114) pour stabiliser en longueur d'onde le laser en commandant le système de commande de tension en réponse à la sortie de mesure, ledit dispositif de commande étant configuré pour recevoir un signal de rétroaction dérivé du dispositif de mesure et pour générer un signal de commande sensible pour commander électriquement le système de commande de tension,
ledit système de commande de tension comprenant un ou plusieurs dispositifs de commande de température (112) pour commander la température d'au moins une partie du support pour entraîner la dilatation ou la contraction thermique de la au moins une partie du support, afin de régler ainsi la tension du réseau de Bragg à fibres.

2. Système laser de la revendication 1, ladite au moins une partie du support comprenant de l'aluminium.

3. Système laser de l'une quelconque des revendications précédentes, ledit dispositif de mesure comprenant un capteur de température configuré pour mesurer une température d'au moins une partie du support.

4. Système laser de l'une quelconque des revendications 1 ou 2, ledit dispositif de mesure étant configuré pour mesurer une longueur d'onde de rayonnement généré à l'aide de la cavité laser.

5. Système laser de l'une quelconque des revendications précédentes, ladite cavité laser étant configurée pour fournir des impulsions comportant une durée inférieure à 100 picosecondes et/ou lesdites impulsions comportant une durée comprise entre 30 et 60 picosecondes.

6. Système laser de l'une quelconque des revendications précédentes, ladite largeur de raie spectrale du laser étant inférieure à 200 picomètres.

7. Système laser de l'une quelconque des revendications précédentes, ledit dispositif de commande étant configuré pour stabiliser la longueur d'onde de fonctionnement du laser dans les limites de 10 % ou moins de la largeur de raie spectrale du laser, par exemple dans les limites de 5 % ou moins de la largeur de raie spectrale du laser, par exemple dans les limites de 1 % ou moins de la largeur de raie spectrale du laser.

8. Système laser de l'une quelconque des revendications précédentes, ledit dispositif de commande étant conçu pour stabiliser la longueur d'onde de fonctionnement du laser dans les limites de 10 picomètres ou moins d'une longueur d'onde de fonctionnement souhaitée, ou pour stabiliser la longueur d'onde de fonctionnement du laser dans les limites de 5 picomètres ou moins d'une longueur d'onde de fonctionnement souhaitée.

9. Système laser de l'une quelconque des revendications précédentes, ledit amplificateur comprenant un amplificateur à fibres d'ytterbium et ladite longueur d'onde de fonctionnement du laser étant comprise entre 1020 nm et 1080 nm.

10. Appareil comprenant :
le système laser à longueur d'onde stable (100) de l'une quelconque des revendications précédentes, et un convertisseur de fréquence (610) pour convertir la longueur d'onde de fonctionnement du système laser en une longueur d'onde convertie.

11. Appareil de la revendication 10, ledit convertisseur de fréquence comprenant un ou plusieurs cristaux de conversion de fréquence non linéaire.

12. Appareil de la revendication 10 ou de la revendication 11, ledit convertisseur de fréquence étant configuré pour convertir la longueur d'onde de fonctionnement du système laser à longueur d'onde stable en une longueur d'onde inférieure à 300 nm.

13. Système laser comprenant :
le système laser à longueur d'onde stable (100) de l'une quelconque des revendications précédentes, et un cristal à l'état solide configuré pour amplifier le rayonnement généré à l'aide du système laser à longueur d'onde stable.

14. Système laser de la revendication 13, ledit cristal à l'état solide comprenant un cristal Nd :YAG.
